# FASCICULE DE BREVET EUROPEEN

(11) **EP 1 694 995 B1**
(45) Date de publication et mention de la délivrance du brevet: **08.01.2014**
(21) Numéro de dépôt: 04805543.8
(22) Date de dépôt: 25.11.2004
(51) Int. Cl.: E02F 9/22, B66C 13/12, F16L 3/015

(54) **ENSEMBLE DE GUIDAGE D'UN CONDUIT SOUPLE DE TRANSPORT D'UN FLUIDE**
ANORDNUNG ZUM FÜHREN EINER FLEXIBLEN FLUIDTRANSPORTLEITUNG
ASSEMBLY FOR GUIDING A FLEXIBLE FLUID-TRANSFER CONDUIT

(30) Priorité: 09.12.2003 FR 0314370
(43) Date de publication de la demande: 30.08.2006
(73) Titulaire: Klac Industrie Société Anonyme, 45160 Olivet (FR)
(72) Inventeur: MORIN, Christian, F-45380 La Chapelle-Saint-Mesmin (FR); FAURE, Fabrice, F-45000 Orléans (FR)
(74) Mandataire: Vander-Heym, Serge Henri Marcel
(86) Numéro de dépôt international: PCT/FR2004/003014
(87) Numéro de publication internationale: WO 2005/057068

(56) Documents cités:
- EP-A- 1 258 965
- GB-A- 819 862
- US-A- 5 577 772
- US-A- 6 095 181

## Description

La présente invention est relative à un dispositif de guidage d'un conduit souple de transport d'un fluide, hydraulique, pneumatique ou électrique.

Dans certains domaines d'activité, il est nécessaire d'utiliser un conduit d'alimentation dont l'entrée est raccordée sur un organe fixe tandis que la sortie est raccordée à un organe mobile, articulé, par exemple, sur celui fixe.

Un tel problème se rencontre, notamment, sur les pelleteuses où il faut commander un vérin situé sur le godet articulé à l'extrémité du bras de la machine.

Selon la position du godet, le conduit d'alimentation forme, au niveau de l'articulation, une boucle particulièrement gênante.

Le dispositif décrit dans la demande de brevet européen publiée sous le N° 1215343 tente de remédier à cet inconvénient. Selon ce dispositif, le conduit souple est partiellement guidé dans un cylindre rigide, porté par le bras mobile et est soumis, vers son extrémité postérieure, à l'action d'un ressort qui tire sur le conduit et s'oppose à la formation d'une boucle au niveau de l'articulation. En fait, ce dispositif n'empêche pas la formation d'une boucle dont la position est imprévisible, mais favorise sa formation à un autre emplacement où celle-ci semble moins gênante. A cela s'ajoute le fait que, lors de l'étirement (pivotement vers le bas du godet), le conduit doit vaincre la force du ressort de rappel en plus de celle due à sa propre masse, avec tous les inconvénients que cela présente.

Le document EP 1 258 965 décrit un ensemble suivant le préambule de la revendication 1.

La présente invention qui remédie à ces inconvénients est remarquable par l'ensemble défini à la revendication 1, des perfectionnements étant définis aux sous-revendications 2 à 5.

Selon une autre caractéristique de l'invention, des moyens sont prévus pour guider la formation de la boucle et pour la contenir selon une position déterminée.

La présente invention sera mieux comprise par la description qui va suivre faite en se référant aux dessins annexés à titre d'exemple indicatif, seulement, sur lesquels :
- la figure 1 est une vue en élévation montrant le dispositif de l'invention ;
- la figure 2 montre le détail A de la figure 1 ;
- la figure 3 est la vue de dessus de la figure 1 ;
- la figure 4 est une vue en coupe, et à plus grande échelle, effectuée selon la ligne IV-IV de la figure 3.

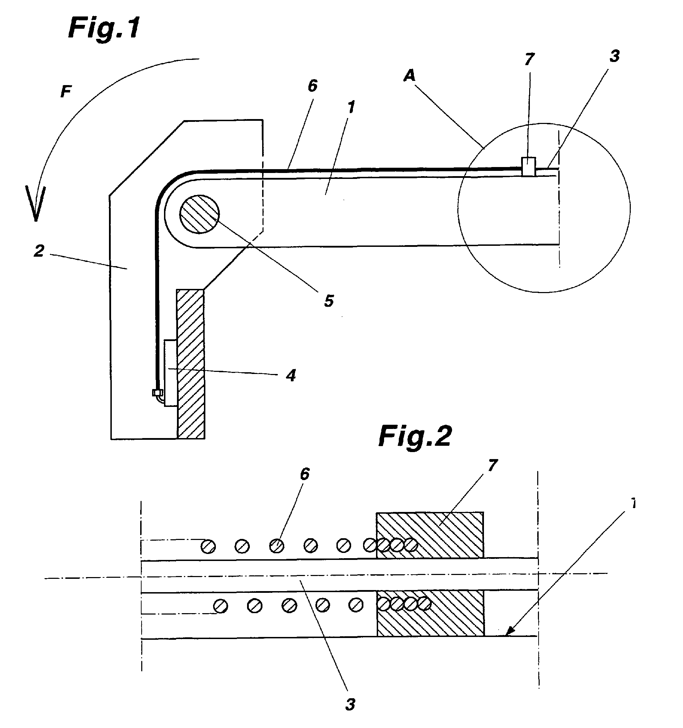

En se reportant à la figure 1, on voit que le problème à résoudre consiste à transmettre un fluide à partir d'un organe fixe 1 à un organe 2 mobile par rapport à celui 1 par l'entremise d'un conduit souple 3.

Pour fixer les idées, le conduit souple doit transmettre un fluide hydraulique à un cylindre 4 porté par le bras 2 articulé par un axe 5 sur l'organe 1.

Selon l'invention, le conduit 3 est guidé dans un tube souple 6 élastiquement déformable fixé par l'une de ses extrémités sur la partie mobile au plus près du point de raccordement du conduit souple 3, par l'autre, sur la partie fixe 1 en un point 7, par exemple.

Selon un mode de réalisation, le tube 6 est constitué par un ressort enroulé en hélice.

Lorsque le bras 2 pivote selon la flèche F, le ressort 6 s'allonge. Par contre, lorsque le bras 2 pivote en sens inverse, le ressort se contracte et le conduit souple 3 forme une boucle en arrière du point de fixation dudit ressort, en coulissant dans ce dernier.

Il est à noter que, dans l'un et l'autre cas, le conduit souple ne subit aucun effort de traction autre que celui lié à son propre poids, ce qui est négligeable.

Le point 8 de raccordement du conduit souple à l'organe 1 est choisi de façon de façon à ce que la distance séparant les points 7 et 8 permette la formation naturelle d'une boucle 9. D'une façon générale, la valeur de la distance séparant les deux points précités est au moins égale au diamètre d'enroulement naturel du conduit. Par diamètre d'enroulement naturel, il faut entendre le diamètre minimal selon lequel on peut enrouler, normalement, le conduit sans l'endommager.

Selon une autre caractéristique de l'invention, des moyens sont prévus pour contrôler la position et la forme de la boucle de façon à ce que celle-ci ne risque pas de perturber le fonctionnement de la machine comportant les organes 1 et 2.

Comme dans l'exemple représenté, les points 7 et 8 sont situés dans un plan horizontal, il apparaît judicieux de contenir la boucle dans un plan horizontal, et de façon à ce que cette dernière se forme à la partie supérieure de l'organe 1.

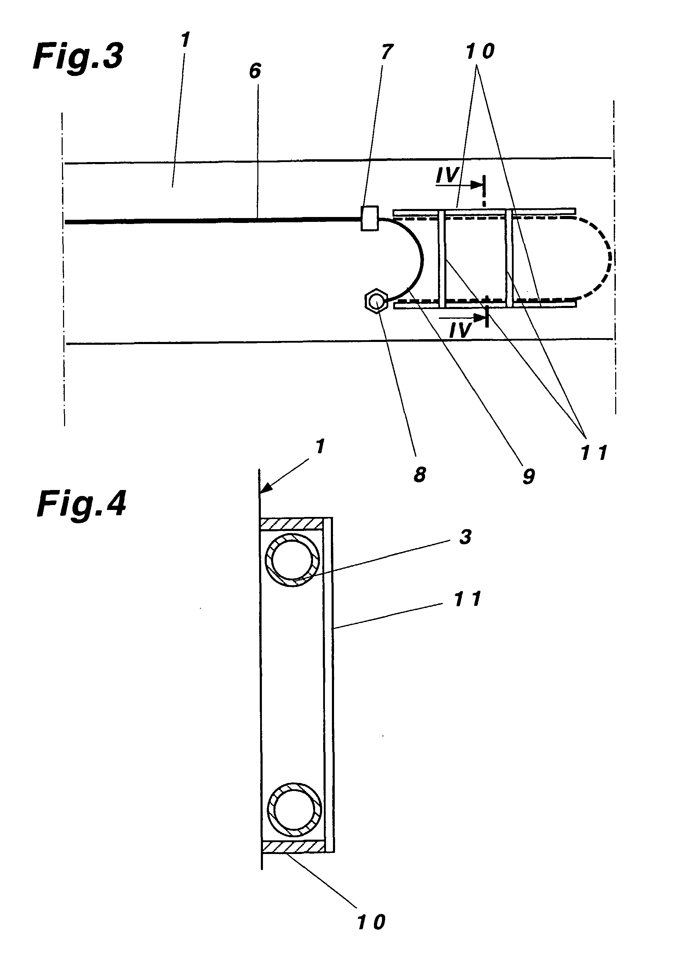

A cet effet, on utilise, deux guides 10, parallèles, situés à la partie supérieure de l'organe 1. Lorsque le bras 2 a effectué son pivotement maximal, à l'inverse de la flèche F, le conduit 3 occupe la position représentée en traits pointillés sur la figure 3.

Pour éviter que la boucle 9 effectue un mouvement de gauchissement, il est possible de prévoir des moyens pour la maintenir dans un plan parallèle à celui de la face supérieure de l'organe 1, des barrettes transversales 11, par exemple, peuvent être utilisées à cet effet.

D'une façon générale, la boucle peut être contenue par un organe de guidage se présentant sous la forme d'un canal aplati dont le plan médian passe, sensiblement, par les points 7 et 8

Il ressort de l'ensemble des explications ci-dessus que la formation de la boucle 9 peut avoir lieu sur l'organe 1 ou sur celui 2.

## Revendications

1. Ensemble comprenant un organe fixe (1), un organe mobile (2) articulé sur ledit organe fixe, un conduit souple (3) transmettant un fluide à partir de l'organe fixe (1) à l'organe mobile (2), et un dispositif pour le guidage du conduit souple (3) transmettant un fluide à partir de l'organe fixe (1) à l'organe mobile (2) articulé sur ledit organe fixe, ledit conduit souple traversant un conduit (6) élastiquement extensible constitué par un ressort enroulé en hélice, **caractérisé en ce que** l'une des extrémités du conduit (6) élastiquement extensible est fixée sur l'organe fixe (1) en un point (7) distinct de celui (8) de raccordement du conduit souple (3) audit organe fixe et **en ce que** l'autre extrémité est fixée sur l'organe mobile (2) au plus près du point de raccordement dudit conduit souple audit organe mobile.

2. Ensemble suivant la revendication 1, **caractérisé en ce que** la distance séparant le point (7) de fixation du tube (6) et le point (8) de raccordement du conduit souple (3) est au moins égale au diamètre d'enroulement naturel dudit conduit.

3. Ensemble suivant la revendication 2, **caractérisé en ce que** des moyens sont prévus pour contrôler la position et la forme de la boucle (9) formée par la partie du conduit (3) qui s'étend hors du tube (6).

4. Ensemble suivant la revendication 3, **caractérisé en ce que** la boucle (9) est conduite entre deux guides parallèles (10).

5. Ensemble suivant la revendication 4, **caractérisé en ce que** la boucle est contenue par un organe de guidage se présentant sous la forme d'un canal aplati.

## Patentansprüche

1. Anordnung, die ein feststehendes Element (1), ein bewegliches Element (2), das mit dem besagten feststehenden Element gelenkig verbunden ist, eine flexible Leitung (3), die ein Fluid von dem feststehenden Element (1) zu dem beweglichen Element (2) überträgt, und eine Einrichtung zum Führen der flexiblen Leitung (3), die ein Fluid von dem feststehenden Element (1) zu dem beweglichen Element (2) überträgt, das mit dem besagten feststehenden Element gelenkig verbunden ist umfasst, wobei die besagte flexible Leitung durch eine elastisch dehnbare Leitung (6) verläuft, die von einer Schraubenfeder gebildet ist, **dadurch gekennzeichnet, dass** eines der Enden der elastisch dehnbaren Leitung (6) an dem feststehenden Element (1) an einem Punkt (7) befestigt ist, der sich von dem (8) der Verbindung der flexiblen Leitung (3) mit dem besagten feststehenden Element unterscheidet, und dass das andere Ende an dem beweglichen Element (2) möglichst nahe dem Punkt der Verbindung der besagten flexiblen Leitung mit dem besagten beweglichen Element befestigt ist.

2. Anordnung nach Anspruch 1, **dadurch gekennzeichnet, dass** der Abstand, der den Punkt (7) der Befestigung des Rohrs (6) und den Punkt (8) der Verbindung der flexiblen Leitung (3) trennt, mindestens gleich dem natürlichen Windungsdurchmesser der besagten Leitung ist.

3. Anordnung nach Anspruch 2, **dadurch gekennzeichnet, dass** Mittel zum Kontrollieren der Position und der Form der Schleife (9) vorgesehen sind, die von dem Teil der Leitung (3) gebildet wird, der sich außerhalb des Rohrs (6) erstreckt.

4. Anordnung nach Anspruch 3, **dadurch gekennzeichnet, dass** die Schleife (9) zwischen zwei parallelen Führungen (10) geführt ist.

5. Anordnung nach Anspruch 4, **dadurch gekennzeichnet, dass** die Schleife von einem Führungselement eingeschlossen ist, das die Form eines abgeflachten Kanals aufweist.

## Claims

1. An assembly consisting of a fixed part (1), a movable part (2) connected to the said fixed part, a flexible conduit (3) transmitting a fluid from the fixed part (1) to the movable part (2), and a device to guide the flexible conduit (3) transmitting a fluid from the fixed part (1) to the movable part (2) connected to the said fixed part, the said flexible conduit crossing an elastically extendable conduit (6) formed by a coiled spring, **characterised in that** one of the ends of the elastically extendable conduit (6) is attached to the fixed part (1) at a point (7) distinct from where the (8) flexible conduit (3) is joined to the said fixed part , and **in that** the other end is fixed to the movable part (2) as close as possible to the joining point of the said flexible conduit to the said movable part.

2. An assembly according to claim 1, **characterised in that** the distance between the tube's (6) fixing point (7) and the flexible conduit's (3) joining point (8) is, at least, equivalent to the diameter of the natural coiling of the said conduit.

3. An assembly according to claim 2, **characterised in that** a means has been devised to control the position and the shape of the loop (9) formed by the part of the conduit (3) which extends outside of the tube (6).

4. Assembly according to claim 3, **characterised in that** the loop (9) is conducted between two parallel guides (10).

5. Assembly according to claim 4, **characterised in that** the loop is contained in a guidance device appearing as a flattened channel shape.
